# EUROPEAN PATENT APPLICATION

(11) **EP 1 712 901 A1**
(43) Date of publication of application: **18.10.2006**
(21) Application number: 06111629.9
(22) Date of filing: 23.03.2006
(51) Int. Cl.: G01N 27/406, G01N 27/417, G01N 27/407

(54) **Switched Gas Sensor**

(30) Priority: 14.04.2005 US 907750
(71) Applicant: Honeywell International Inc., Morristown, New Jersey 07962 (US)
(72) Inventor: Rhodes, Michael L., Minnesota, 55423 (US); Kroot, Peter J.M, NL-5672 HH, Nucnen (NL)
(74) Representative: Haley, Stephen

(57) **Abstract**

Apparatus and methods for measuring gas component concentrations are disposed. The method includes measuring a total gas concentration, including a first gaseous component and a second gaseous component, in an atmosphere with a gas sensor. The gas sensor indudes a first cell and a second cell. The first cell is electrically coupled to a pump controller and the second cell is electrically coupled to a sense controller. The pump controller and sense controller are then switched such that the pump controller is electrically coupled to the second cell and the sense controller is electrically coupled to the first cell. Then a first gaseous component concentration is measured.

## Description

The present invention generally relates to gas sensors and methods of determining the concentration of gaseous components, and in some cases, to sensors and methods for determining the concentration of O₂ and NOₓ in a gaseous atmosphere.

Sensors for determining the oxygen composition of gaseous mixtures, such as engine exhaust, are known to the art. For example. U.S. Pat. Nos. 4,272,329, 4,272,330, and 4,272,331 teach an oxygen sensor including a pump cell and a sensor cell, each having solid zirconia electrolyte and thin platinum electrodes attached thereto. The sensor cell and the pump cell, along with a ceramic tube, form an enclosed volume in which the ambient air establishes equilibrium by means of a leak opening in the ceramic tube. The pump cell is connected, by external circuitry, to an electrical input, while the sensor cell is coupled, by external circuitry, to electrical output measurement and control means.

The oxygen sensor taught by the '329 patent is operated in a steady-state mode whereby voltage is applied to the pump cell to electrochemically pump oxygen from the enclosed volume until a steady-state is reached wherein the rate of oxygen pumped from the volume is in equilibrium with the rate of oxygen diffusing into the volume through the leak hole. At steady-state, the oxygen partial pressure in the enclosed volume is reduced from ambient, causing an EMF to develop across the electrodes of the sensor cell. By adjusting the pump cell current to provide a constant sensor cell voltage, the pump cell current is linearly proportional to the percentage oxygen in the ambient atmosphere.

The oxygen sensor taught by the '330 patent uses a similar device operated in a transient mode to measure oxygen partial pressure. After ambient atmosphere of a desired oxygen partial pressure is established in the enclosed volume, the pump cell is activated to withdraw oxygen from the enclosed space. Reduction of oxygen partial pressure in the enclosed space causes an EMF to develop across the sensor cell. The first derivative of sensor cell voltage/time evaluated at or shortly after the initiation of a voltage drop is inversely proportional to the ambient oxygen partial pressure. The oxygen sensor may also be operated by pumping oxygen into the enclosed space and reversing the sign of the initial sensor cell voltage to determine the ambient oxygen partial pressure.

The oxygen sensor taught by the '331 patent uses a similar device operated in an oscillatory mode whereby a repetitive sequence of oxygen pumping currents flow to the pump cell in response to voltage inputs from the sensor cell. The pump cell withdraws oxygen from the enclosed space until the voltage drop induced at the sensor cell equals a predetermined reference value. The polarity of the pump cell current is then reversed to pump oxygen into the enclosed space until the sensor cell voltage reaches another predetermined reference value, at which time the pump cell current is again reversed and the cycle is repeated. With the magnitude of the pump cell current fixed, the period of oscillation is proportional to the oxygen partial pressure.

Sensors for determining the oxides of nitrogen (NOx) composition of gaseous mixtures, such as engine exhaust, are known to the art. For example, U.S. Pat. Nos. 6,344,134, discloses a method of measuring NOₓ concentration using a two-serial-space NOₓ sensor. The sensor includes a first pumping cell and a second pumping cell each comprising a solid electrolyte. In the sensor, a measurement gas space, a first space, and a second space communicate in series with each other. The method includes the steps of: pumping out oxygen from the first space into, for example, the measurement gas space, or pumping oxygen into the first space from, for example, the measurement gas space by action of the first pumping cell so that the oxygen concentration in the vicinity of a gas inlet of the second space becomes such that a portion of NO in the first space dissociates; dissociating residual NO and O₂ in gas introduced into the second space from the first space by action of the second pumping cell; pumping out oxygen ions generated by dissociation of NO and O₂ from the second space by action of the second pumping cell; and determining the concentration of NOₓ in the measurement gas based on signals (for example, pumping currents) issued from the first and second pumping cells.

Existing oxide-based gas sensors do not meet either performance or cost needs to address new environmental regulations, particularly with regard to engine exhaust. Improved oxide-based gas sensors are desired.

The present disclosure generally relates to gas sensors and methods of determining the concentration of gaseous components, and in some cases, to sensors and methods for determining the concentration of O₂ and NOₓ in a gaseous atmosphere.

In one illustrative embodiment, a method for measuring gas component concentrations is disclosed. The method includes measuring a total gas concentration, including a first gaseous component and a second gaseous component, in an atmosphere with a gas sensor. The gas sensor includes a first cell and a second cell. The first cell is electrically coupled to a pump controller and the second cell is electrically coupled to a sense controller. The pump controller and sense controller are then switched such that the pump controller is electrically coupled to the second cell and the sense controller is electrically coupled to the first cell. Then a first gaseous component concentration is measured.

In another embodiment, a method includes measuring a first total gas concentration in an atmosphere with a gas sensor, at a first temperature. The total gas concentration includes a first gaseous component, a second gaseous component, and a third gaseous component. The gas sensor includes a first cell and a second cell. The first cell is electrically coupled to a pump controller and the second cell is electrically coupled to a sense controller. The method then includes, measuring a second total gas concentration in an atmosphere with the gas sensor, at a second temperature being different than the first temperature. The second total gas concentration includes a first gaseous component, a second gaseous component, and a third gaseous component. The pump controller and sense controller are then switched such that the pump controller is electrically coupled to the second cell and the sense controller is electrically coupled to the first cell. Then, a first gaseous component concentration is measured.

in still a further embodiment, a gas sensor apparatus includes a gas sensor element including a first cell and a second cell. The first cell is electrically coupled to a pump controller and the second cell is electrically coupled to a sense controller. A switching element is electrically disposed between the gas sensor element and the pump and sense controllers. The switching element is capable of switching an electrical signal routing from the first cell or the second cell to the pump controller or the sense controller.

These and other aspects of the present application will be apparent from the detailed description below. In no event, however, should the above summaries be construed as limitations on the claimed subject matter, which subject matter is defined solely by the attached claims, as may be amended during prosecution.

### In the Drawings :

The invention may be more completely understood in consideration of the following detailed description of various embodiments of the invention in connection with the accompanying drawings, in which:

FIG. 1 is a schematic cross-section of a switched gas sensor device in a first position;

FIG, 2 is a schematic cross-section of a switched gas sensor device in a second position;

FIG. 3 is a flow diagram of an illustrative method of the invention; and

FIG. 4 is a flow diagram of another illustrative method of the invention.

While the invention is amenable to various modifications and alternative forms, specifics thereof have been shown by way of example in the drawings and will be described in detail. It should be understood, however, that the intention is not to limit the invention to the particular illustrative embodiments described. On the contrary, the intention is to cover all modifications, equivalents, and alternatives falling within the spirit and scope of the invention.

The following description should be read with reference to the drawings, in which like elements in different drawings are numbered in like fashion. The drawings, which are not necessarily to scale, depict selected embodiments and are not intended to limit the scope of the invention. Although examples of construction, dimensions, and materials may be illustrated for the various elements, those skilled in the art will recognize that many of the examples provided have suitable alternatives that may be utilized.

Generally, the present invention pertains to gas sensors and methods of determining the concentration of gaseous components, and in some cases, to sensors and methods for determining the concentration of O₂ and NOₓ in a gaseous atmosphere. While the present invention is not so limited, an appreciation of various aspects of the invention will be gained through a discussion of the various illustrative embodiments and examples provided below.

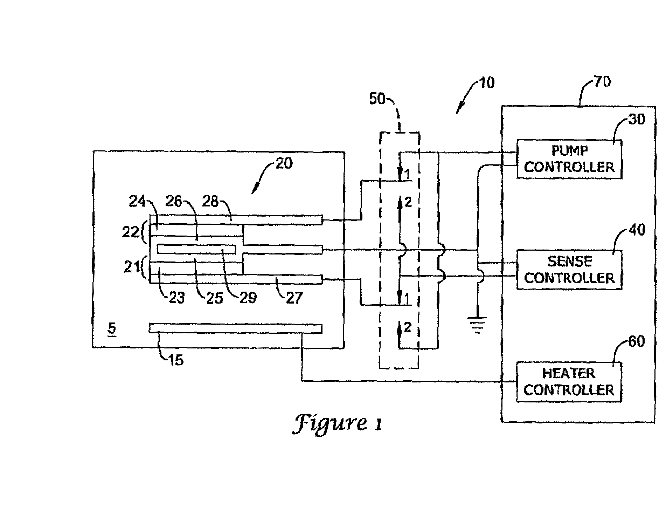

FIG. 1 is a schematic cross-section of a switched gas sensor device 10 in a first position 1. The gas sensor devices 10 includes a sensor element 20 electrically coupled to a pump controller 30 and a sense controller 40. As used herein, the term "controller" refers to electronics and/or software. The sensor element 20 is disposed within a first space 5 containing one or more gases to be measured by the sensor element 20. An optional heating element 1 5 is shown electrically coupled to a heater controller 60. The heating element 15 can modify a temperature at which the sensor element 20 senses at. In the illustrative embodiment shown, the pump controller 30, sense controller, and the heater controller 60 are disposed within a controller module 70.

The sensor element 20 includes a first cell 21 and a second cell 22. The sensor element 20 can be any configuration such as, for example, cylindrical or planar. The sensor element 20 shown has a cylindrical configuration.

The first cell 21 includes an oxygen-ion conductive solid electrolyte layer 23 such as a zirconium oxide layer disposed between two first cell conductive electrodes 25 and 27. In one embodiment, one of the first cell conductive electrodes 25 is a first cell platinum electrode 25 and the other first cell conductive electrode 27 is a first cell gold electrode 27. In some embodiments, the first cell gold electrode 27 is a platinum electrode with a layer of gold disposed on an outer surface of the platinum electrode, where the gold layer is exposed to the first space 5 containing one or more gases to be measured.

The second cell 22 includes an oxygen-ion conductive solid electrolyte layer 24 such as a zirconium oxide layer disposed between two second cell conductive electrodes 26 and 28. In some embodiments, both of the second cell conductive electrodes 26 and 28 are second cell platinum electrodes 26 and 28. In one embodiment, the first cell 21 and second cell 22 inner electrodes 25 and 26 is a common platinum electrode. A sealed measurement space 29 is disposed within the sensor element 20. An illustrative oxygen sensor element 20 is described in U.S. 4,545,889, which is incorporated by reference herein.

FIG. 1 shows the sensor element 20 electrically coupled to the pump controller 30 and sense controller 40 in a first position 1. In this embodiment, the first cell 21 is electrically coupled to the pump controller 30 and the second cell 22 is electrically coupled to the sense controller 40. In one embodiment, the first cell 21 has a layer of zirconium oxide 23 disposed between a gold outer electrode 27 and a platinum inner electrode 25; the second cell 22 has a layer of zirconium oxide 24 disposed between a platinum outer electrode 28 and a platinum inner electrode 26. In this configuration, a total gas concentration can be measured. The total gas concentration can include at least a first gaseous component and a second gaseous component. In one embodiment, the first gaseous component can be oxygen and the second gaseous component can be oxides of nitrogen (NOₓ).

The pump controller 30 and the sense controller 40 can be switched to be electrically coupled to either the first cell 21 or second cell 22 via a switching element 50. The switching element 50 can be controlled by hardware and/or software capable of switching the electrical signal routing from the first cell 21 and second cell 22 to the pump controller 30 and the sense controller 40.

Pump controllers 30 and sense controllers 40 are well known in the art. When pump controller 30 are electrically coupled to, for example, the first cell 21, and a pumping current is applied, ion pumping action takes place between the first cell electrodes 25 and 27. Concurrently, the second cell electrodes 26 and 28 cooperate to detect an electromotive force induced therebetween, as is well known.

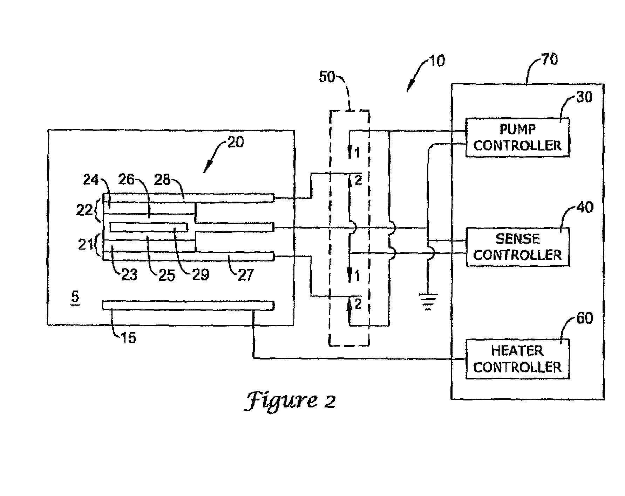

FIG. 2 is a schematic cross-section of a switched gas sensor device 10 showing the sensor element 20 electrically coupled to pump controller 30 and sense controller 40 in a second position 2. in this embodiment, the first cell 21 is electrically coupled to the sense controller 40 and the second cell 22 is electrically coupled to the pump controller 30. In one embodiment, the first cell 21 has a layer of zirconium oxide 23 disposed between a gold outer electrode 27 and a platinum inner electrode 25; the second cell 22 has a layer of zirconium oxide 24 disposed between a platinum outer electrode 28 and a platinum inner electrode 26. In this configuration, a first gaseous component concentration can be measured, In this embodiment, the first gaseous component can be oxygen. Then, the second gaseous concentration can be determined by taking the difference between the total gas concentration and the first gaseous component concentration, to determine, for example, NOx concentration.

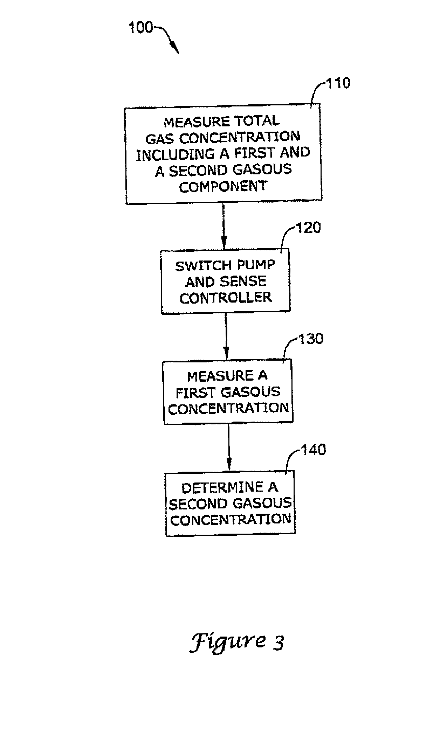

FIG. 3 is a flow diagram of an illustrative method 100 of the invention. Using a gas sensor 10 described above, various components of a gas can be measured. Specifically, and in one illustrative embodiment, the gas sensor 10 can include a first cell 21 having a layer of zirconium oxide 23 disposed between a gold outer electrode 27 and a platinum inner electrode 25; the second cell 22 can have a layer of zirconium oxide 24 disposed between a platinum outer electrode 28 and a platinum inner electrode 26. An illustrative method may include the steps of:

(1) Measuring a total gas concentration including a first gaseous component (O₂) and a second gaseous component (NOₓ), in an atmosphere with the gas sensor, while the first cell is electrically coupled to the pump controller and the second cell is electrically coupled to the sense controller (see Block 110).

(2) Switching the pump controller and sense controller such that the pump controller is electrically coupled to the second cell and the sense controller are electrically coupled to the first cell (see Block 120).

(3) Measuring a first gaseous concentration in the atmosphere with the gas sensor after the step of switching the pump controller and sense controller (see Block 1 30).

The second gaseous concentration can then be determined by subtracting the first gaseous concentration from the total gaseous concentration (see Block 140).

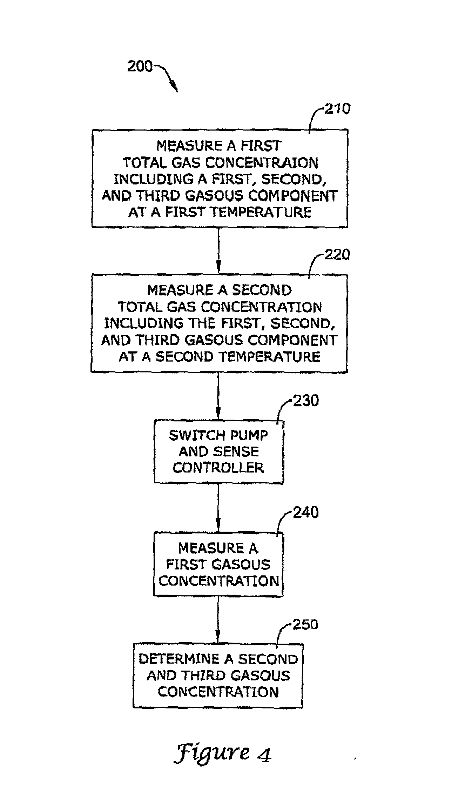

FIG. 4 is a flow diagram of another illustrative method 200 of the invention. Using a gas sensor 10 described above, various components of a gas can be measured. Specifically, and in the illustrative embodiment, the gas sensor 10 can include a first cell 21 having a layer of zirconium oxide 23 disposed between a gold outer electrode 27 and a platinum inner electrode 25; the second cell 22 can have a layer of zirconium oxide 24 disposed between a platinum outer electrode 28 and a platinum inner electrode 26. An illustrative method may include the steps of:

(1) Measuring a first total gas concentration at a first temperature, including a first gaseous component (O₂), a second gaseous component (NOₓ), and a third gaseous component (NH₃), in an atmosphere with a gas sensor, while the first cell is electrically coupled to pump controller and the second cell is electrically coupled to sense controller (see Block 210).

(2) Measuring a second total gas concentration at a second temperature being different than the first temperature, including the first gaseous component, the second gaseous component, and the third gaseous component, in an atmosphere with the gas sensor (see Block 220).

(3) Switching the pump controller and sense controller such that the pump controller is electrically coupled to the second cell and the sense controller are electrically coupled to the first cell (see Block 230).

(4) Measuring a first gaseous component concentration in the atmosphere with the gas sensor after the step of switching the pump electronics and sense electronics (see Block 240).

(5) Determining the second gaseous component concentration and third gaseous component concentration by subtracting the first gaseous component concentration from the first or second total gaseous concentration (see Block 250).

In some embodiments, component concentrations of oxides of nitrogen and ammonia can be determined by measuring total gas concentrations at two different temperatures. As described above, the temperature at which the sensor operates can be modified by the optional heater shown in Figure 1. Oxides of nitrogen and ammonia react at different rates as a function of temperature. Thus, knowing the relative reaction rates of these components allows a measure of these two components to be determined when two measurements at different temperatures are taken. In some embodiments, the first and second total gas concentrations can be measured at temperatures being 25 to 200 degrees Celsius different, or 50 to 150 degrees Celsius different, or 75 to 125 degrees Celsius different. In some embodiments, the first total gas concentration can be taken at a first temperature in a range from 650 to 850 degrees Celsius and the second total gas concentration measured at a temperature in a range of 50 to 150 degrees different than the first temperature.

The present invention should not be considered limited to the particular examples described above, but rather should be understood to cover all aspects of the invention as fairly set out in the attached claims. Various modifications, equivalent processes, as well as numerous structures to which the present invention can be applicable will be readily apparent to those of skill in the art to which the present invention is directed upon review of the instant specification.

## Claims

1. A method comprising steps of:
measuring a total gas concentration, comprising a first gaseous component and a second gaseous component, in an atmosphere with a gas sensor, the gas sensor comprising a first cell and a second cell, wherein the first cell is electrically coupled to a pump controller and the second cell is electrically coupled to a sense controller;
switching the pump controller and sense controller such that the pump controller is electrically coupled to the second cell and the sense controller is electrically coupled to the first cell; and
measuring a first gaseous component concentration in the atmosphere with the gas sensor after the step of switching the pump controller and sense controller.

2. A method according to claim 1 further comprising a step of determining a measure of the second gaseous component concentration by subtracting the first gaseous component concentration from the total gaseous concentration.

3. A method according to claim 1 wherein the step of measuring a total gas concentration comprises measuring a total gas concentration comprising a first gaseous component and a second gaseous component, in an atmosphere with a gas sensor, the gas sensor comprising a first cell and a second cell, wherein the first cell comprises a first cell zirconium oxide layer disposed between a first cell platinum electrode and an first cell gold electrode and the second cell comprises a second cell zirconium oxide layer disposed between two second cell platinum electrodes.

4. A method according to claim 1 wherein the step of measuring a total gas concentration comprises measuring a total gas concentration comprising a first gaseous component and a second gaseous component, in an atmosphere with a gas sensor, the first gaseous component being oxygen and the second gaseous component being NOₓ.

5. A method according to claim 1 wherein the step of measuring a total gas concentration comprises measuring a total gas concentration comprising a first gaseous component and a second gaseous component, in an atmosphere with a gas sensor, the gas sensor comprising a first cell and a second cell, wherein the first cell comprises a first cell zirconium oxide layer disposed between a first cell platinum electrode and an first cell gold electrode and the second cell comprises a second cell zirconium oxide layer disposed between the first cell platinum electrode and a second cell platinum electrode.

6. A method comprising steps of:
measuring a first total gas concentration at a first temperature, comprising a first gaseous component, a second gaseous component, and a third gaseous component, in an atmosphere with a gas sensor, the gas sensor comprising a first cell and a second cell, wherein the first cell is electrically coupled to a pump controller and the second cell is electrically coupled to a sense controller;
measuring a second total gas concentration at a second temperature being different than the first temperature, comprising a first gaseous component, a second gaseous component, and a third gaseous component, in an atmosphere with the gas sensor;
switching the pump controller and sense controller such that the pump controller is electrically coupled to the second cell and the sense controller is electrically coupled to the first cell; and
measuring a first gaseous component concentration in the atmosphere with the gas sensor after the step of switching the pump controller and sense controller.

7. A method according to claim 6 further comprising a step of determining the second gaseous component concentration and third gaseous component concentration by subtracting the first gaseous component concentration from the first or second total gaseous concentration.

8. A method according to claim 7 wherein the step of determining the second gaseous component concentration and third gaseous component concentration comprises determining the second gaseous component concentration and third gaseous component concentration by solving an equation that includes the first and second total gaseous concentration.

9. A method according to claim 6 wherein the step of measuring a first total gas concentration comprises measuring a first total gas concentration at a first temperature comprising a first gaseous component, a second gaseous component, and a third gaseous component in an atmosphere with a gas sensor, the gas sensor comprising a first cell and a second cell, wherein the first cell comprises a first cell zirconium oxide layer disposed between a first cell platinum electrode and an first cell gold electrode and the second cell comprises a second cell zirconium oxide layer disposed between two second cell platinum electrodes.

10. A method according to claim 6 wherein the step of measuring a first total gas concentration comprises measuring a first total gas concentration at a first temperature comprising a first gaseous component, a second gaseous component, and a third gaseous component in an atmosphere with a gas sensor, the first gaseous component being oxygen, the second gaseous component being NOₓ, and the third gaseous component being NH₃.

11. A method according to claim 6 wherein the step of measuring a first total gas concentration comprises measuring a first total gas concentration at a first temperature comprising a first gaseous component, a second gaseous component, and a third gaseous component in an atmosphere with a gas sensor, the gas sensor comprising a first cell and a second cell, wherein the first cell comprises a first cell zirconium oxide layer disposed between a first cell platinum electrode and an first cell gold electrode and the second cell comprises a second cell zirconium oxide layer disposed between the first cell platinum electrode and a second cell platinum electrode.

12. A method according to claim 6 wherein the step of measuring a second total gas concentration comprises measuring a second total gas concentration at a second temperature being 25 to 200 degrees Celsius different than the first temperature.

13. A method according to claim 6 wherein the step of measuring a second total gas concentration comprises measuring a second total gas concentration at a second temperature being 50 to 150 degrees Celsius different than the first temperature.

14. A method according to claim 6 wherein the step of measuring a first total gas concentration comprises measuring a first total gas concentration at a first temperature being in a range from 650 to 850 degrees Celsius and wherein the step of measuring a second total gas concentration comprises measuring a second total gas concentration at a second temperature being 50 to 150 degrees Celsius different than the first temperature.

15. A gas sensor apparatus comprising:
a gas sensor element comprising a first cell and a second cell, wherein the first cell is electrically coupled to a pump controller and the second cell is electrically coupled to a sense controller;
a switching element electrically disposed between the gas
sensor element and the pump and sense controllers, the switching element being capable of switching an electrical signal routing from the first cell or the second cell to the pump controller or the sense controller.

16. A gas sensor apparatus according to claim 15 wherein the gas sensor element further comprises a heating element.

17. A gas sensor apparatus according to claim 15 wherein the first cell is electrically coupled to a pump controller and the second cell is electrically coupled to a sense controller when the switching element is in a first position and the first cell is electrically coupled to the sense controller and the second cell is electrically coupled to the pump controller when the switching element is in a second position.

18. A gas sensor apparatus according to claim 15 wherein the first cell comprises a first cell zirconium oxide layer disposed between a first cell platinum electrode and an first cell gold electrode and the second cell comprises a second cell zirconium oxide layer disposed between two second cell platinum electrodes.

19. A gas sensor apparatus according to claim 15 wherein the first cell comprises a first cell zirconium oxide layer disposed between a first cell platinum electrode and an first cell gold electrode and the second cell comprises a second cell zirconium oxide layer disposed between the first cell platinum electrode and a second cell platinum electrode.

20. A gas sensor apparatus according to claim 15 wherein the first cell and the second cell form a unitary gas sensor cell construction.
